# EUROPÄISCHE PATENTSCHRIFT

(11) **EP 0 458 780 B1**
(45) Veröffentlichungstag und Bekanntmachung des Hinweises auf die Patenterteilung: **06.10.1993**
(21) Anmeldenummer: 89902231.3
(22) Anmeldetag: 16.02.1989
(51) Int. Cl.: G01N 30/32, B01D 15/08

(54) **VERFAHREN UND EINRICHTUNG ZUR REGELUNG DES TRÄGERGASDRUCKS BEI DER VENTILLOSEN TRENNSÄULENSCHALTUNG IN DER GASCHROMATOGRAPHIE**
PROCESS AND DEVICE FOR CONTROLLING THE CARRIER GAS PRESSURE IN A VALVELESS SEPARATING COLUMN CIRCUIT IN GAS CHROMATOGRAPHY
PROCEDE ET DISPOSITIF POUR REGULER LA PRESSION DU GAZ PORTEUR DANS UN CIRCUIT DE COLONNES DE FRACTIONNEMENT SANS SOUPAPE DANS LA CHROMATOGRAPHIE EN PHASE GAZEUSE

(43) Veröffentlichungstag der Anmeldung: 04.12.1991
(73) Patentinhaber: SIEMENS AKTIENGESELLSCHAFT, 80333 München (DE)
(72) Erfinder: MUELLER, Friedhelm, D-7515 Linkenheim 1 (DE)
(86) Internationale Anmeldenummer: DE8900089
(87) Internationale Veröffentlichungsnummer: WO9009585

(56) Entgegenhaltungen:
- DE-A- 2 840 612
- DE-B- 1 212 317
- GB-B- 1 291 724
- US-A- 3 240 052
- US-A- 3 405 551

## Beschreibung

Die Erfindung bezieht sich auf ein Verfahren gemäß Oberbegriff des Anspruchs 1 und auf eine Einrichtung zur Durchführung des Verfahrens gemäß Oberbegriff des Anspruchs 2.

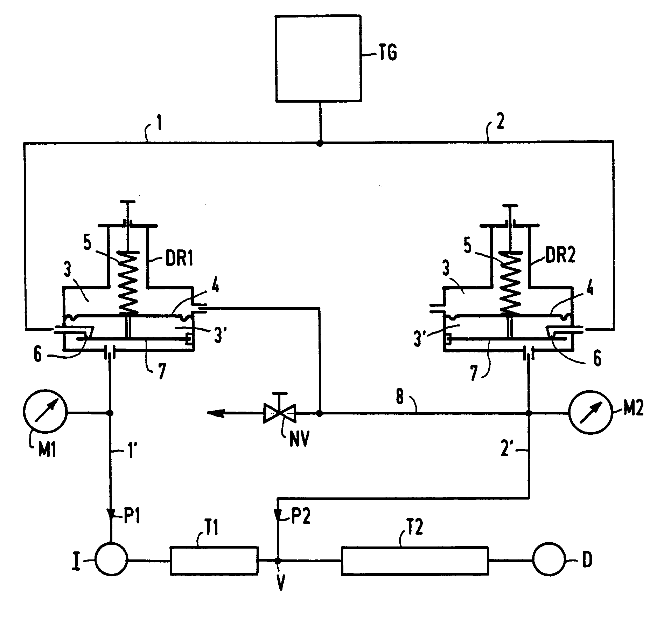

Ventillose Trennsäulenschaltungen mit zwei hintereinandergeschalteten Trennsäulen, bei denen zwecks Rückspülung die Strömungsrichtung des Gases in der ersten Trennsäule mit Hilfe eines durch Umschalten der Trägergaszufuhr hervorgerufenen Druckgefälles umkehrbar ist, sind bekannt, siehe z. B. US-Z "Instrument News", Vol. 19, 1969, No. 4, Seite 16, Figur 1 oder DE-A-2840612. Die Trägergaszufuhr erfolgt einmal über einen Probeninjektor auf den Eingang der ersten Trennsäule und zum anderen auf die Verbindungsstelle zwischen den beiden Trennsäulen, also auf den Ausgang der ersten Säule. Die Drücke in den beiden Trägergaszuleitungen sind mit Hilfe von Druckreglern einstellbar. Während bei der Laborgaschromatographie die Geräte bei relativ gleichbleibender Umgebungstemperatur betrieben werden, sind die Geräte bei der Prozeßgaschromatographie unter Umständen erheblichen Temperaturschwankungen ausgesetzt. Bei der Verwendung handelsüblicher, temperaturkompensierter Gasdruckregler, die beispielsweise bei einem Ausgangsdruck von 2 bar und bei normaler Raumtemperatur (20 °C) ca. 3 %o / 10 °C Fehler aufweisen, steigt dieser Fehler bei höherem Druck überproportional an und beträgt bei 3 bar etwa 6%o / 10 °C.
Der bei der ventillosen Trennsäulenschaltung über der ersten Trennsäule abfallende Differenzdruck bestimmt die Retentionszeiten der Säule, er ist möglichst konstant zu halten.
Änderungen der Umgebungstemperatur bewirken aufgrund des unterschiedlichen prozentualen Temperaturfehlers bei verschiedenen Drücken eine Veränderung des Differenzdrucks über der ersten Säule und führen demgemäß zu Retentionszeitverschiebungen, die sich insbesondere bei der Verwendung von Hochleistungs-Kapillartrennsäulen aufgrund der schmalen Peaks negativ auf das Ergebnis auswirken.

Es besteht demgemäß die Aufgabe, das bekannte Verfahren der ventillosen Trennsäulenschaltung so zu verbessern, daß auf möglichst einfache Weise eine weitgehende Unabhängigkeit von temperatur- und druckbedingten Abweichungen des in der ersten Trennsäule wirkenden Differenzdrucks erreicht wird und somit die vom Durchfluß durch die Säule abhängigen Retentionszeiten weitgehend konstant bleiben.

Eine Lösung der Aufgabe wird in einem Verfahren mit den Merkmalen des Anspruchs 1 und einer Einrichtung zur Durchführung des Verfahrens mit den Merkmalen des Anspruchs 2 gesehen.

Dazu wird eine Kaskadenregelung vorgesehen, mit dem in der Zuleitung zu der Verbindungsstelle der Trennsäulen liegenden Gasdruckregler als Führungsregler, dessen Ausgangsdruck zumindest anteilig die Führungsgröße des anderen Druckreglers bildet. Damit läßt sich die durch den prozentualen Temperaturfehler bedingte Verschiebung der Retentionszeiten gegenüber der bisher üblichen unabhängigen Regelung der beiden Trägergasströme um etwa eine dezimale Größenordnung verringern, so daß auch bei größeren Schwankungen der Umgebungstemperatur die Meßergebnisse nicht verfälscht werden.

Zur Erläuterung der Erfindung ist in der Figur ein Ausführungsbeispiel der erfindungsgemäßen Druckregelung schematisch dargestellt und im folgenden beschrieben.

Die Wirkungsweise der ventillosen Trennsäulenschaltung kann als bekannt vorausgesetzt werden, sie besteht im wesentlichen aus einem Probeninjektor I, zwei hintereinandergeschalteten Trennsäulen T1, T2 und einem Detektor D. Für die Erfindung nicht relevante Elemente der ventillosen Trennsäulenschaltung sind in der Figur der Übersichtlichkeit halber nicht dargestellt.
Von der Trägergasquelle TG führen zwei Leitungszweige 1 und 2 zu den jeweiligen Eingängen der Gasdruckregler DR1 und DR2. Bei diesen bekannten Gasdruckreglern sind jeweils in einem Gehäuse zwei Druckkammern 3, 3' und eine diese trennende Membran 4 angeordnet, auf welche einerseits eine Druckfeder 5 wirkt, mit welcher durch axiale Verstellung ein Drucksollwert eingestellt wird. Auf die gegenüberliegende Seite der Membran 4 wirkt der von dem jeweiligen Düse-Prallplatte-System 6, 7 erzeugte Ausgangsdruck P₁ bzw. P₂, der mit Hilfe der Druckmesser M1 und M2 eingestellt und überwacht wird.

Die vom Ausgang des Druckreglers DR1 ausgehende Trägergaszuleitung 1' wird über einen Probeninjektor I zum Eingang der Trennsäule T1 geführt, die vom Ausgang des Druckreglers DR2 ausgehende Zuleitung 2' zu der Verbindungsstelle V am Ausgang der ersten Trennsäule T1. Der Ausgang des Druckreglers DR2 ist über eine Leitung 8 mit

der eingangsseitigen Druckkammer 3 des Druckreglers DR1 verbunden, so daß dieser als Differenzdruckregler wirkt, dessen Führungsgroße, also der Sollwert, sich aus einem mit der Feder 5 fest einstellbaren Anteil und einem durch den Druck P₂ bestimmten Anteil zusammensetzt.
In einem in die Atmosphäre mündenden Abzweig der Leitung 8 ist ein einstellbarer Strömungswiderstand, z. B. ein Nadelventil NV mit einer Durchflußrate von einigen Millilitern pro Minute, angeordnet, um bei Regelvorgängen einen möglichen Rückfluß aus dem Gasdruckregler DR1 in die Zuleitung 2' zu verhindern.

Bei einem Anwendungsbeispiel war der Druck P₁ 2 bar, der Druck P₂ 1,5 bar, so daß der Differenzdruck über die erste Trennsäule T1 0,5 bar betrug. Es wurden drei Komponenten eines Gasgemisches bestimmt, und zwar einmal bei der Umgebungstemperatur von 20 °C (Raumtemperatur) und bei der Umgebungstemperatur von 45 °C.
Wie sich aus den in folgenden Tabellen aufgeführten experimentellen Werten erkennen läßt, wird mit der Differenzdruckregelung gemäß der Erfindung eine erheblich bessere Einhaltung der Retentionszeiten erreicht.
Tabelle A zeigt die aufgetretenen Abweichungen von der Retentionszeit bei einer üblichen Schaltung der Trägergasversorgung mit zwei unabhängigen Gasdruckreglern, Tabelle B die entsprechenden Werte bei der erfindungsgemäß geregelten Trägergasversorgung.

**Tabelle A**

| | Retentionszeit | | maximale Abweichung |
|---|---|---|---|
| | bei 20 °C | bei 45 °G | |
| Komponente 1 | 5,210 min | 5,370 min | + 0,160 min |
| Komponente 2 | 10,335 " | 10,470 " | + 0,125 " |
| Komponente 3 | 16,940 " | 17,110 " | + 0,170 " |

**Tabelle B**

| | Retentionszeit | | maximale Abweichung |
|---|---|---|---|
| | bei 20 °C | bei 45 °C | |
| Komponente 1 | 5,145 min | 5,125 min | - 0,020 min |
| Komponente 2 | 10,335 " | 10,350 " | + 0,015 " |
| Komponente 3 | 16,980 " | 17,005 " | + 0,020 " |

Wie zu erkennen ist, betragen bei einer Temperaturdifferenz der Umgebungstemperatur von ∼ 25 °C die Abweichungen der Retentionszeiten gemäß Tabelle B nur etwa 10 % der Abweichungen in Tabelle A.

### Bezugszeichenliste

- D: Detektor
- TG: Trägergasquelle
- T1, T2: Trennsäulen
- I: Probeninjektor
- DR1, DR2: Gasdruckregler
- M1, M2: Druckmesser
- NV: Nadelventil
- 1, 11, 2, 2': Trägergaszuleitungen
- 3, 3': Druckkammern
- 4: Membran
- 5: Feder zur Einstellung der Führungsgröße (Sollwert)
- 6,: Düse-
- 7: Prallplatte
- 8: Leitung

## Patentansprüche

1. Verfahren zur Konstanthaltung der Druckdifferenz, die über einer ersten von zwei hintereinandergeschalteten gaschromatischen Trennsäulen einer ventillosen Trennsäulenschaltung abfällt, bei dem dem Eingang und dem Ausgang der ersten Trennsäule jeweils Trägergas mit geregeltem Druck zugeführt wird, **dadurch gekennzeichnet,** daß die Führungsgröße für die Regelung des Trägergasdrucks am Eingang der ersten Trennsäule zumindest anteilig aus deren Ausgangsdruck gebildet wird.

2. Einrichtung zur Durchführung des Verfahrens nach Anspruch 1 mit einem ersten Gasdruckregler (DR1) in der Trägergaszuleitung (1, 1') zum Eingang der ersten Trennsäule (T1), einem zweiten Gasdruckregler (DR2) in der Trägergaszuleitung (2, 2') zur Verbindungsstelle (V) der Trennsäulen (T1, T2), **dadurch gekennzeichnet,** daß Gasdruckregler vom Membranreglertyp verwendet sind mit federbelasteter Membran (4) zur mechanischen Einstellung der Führungsgröße und daß der Ausgang des zweiten Druckreglers (DR2) über eine Leitung (8) an einen Eingang eines Differenzdruckreglers als ersten Druckregler (DR1) angeschlossen ist, dessen Führungsgröße zumindest anteilig vom Ausgangsdruck (P₂) des zweiten Druckreglers (DR2) gebildet wird.

3. Einrichtung nach Anspruch 2, **dadurch gekennzeichnet,** daß in einem in die Atmosphäre mündenden Abzweig der Verbindungsleitung (8) ein den Durchfluß auf einige Milliliter pro Minute begrenzendes Nadelventil (NV) angeordnet ist.

## Claims

1. Process for keeping constant the pressure difference which decreases over a first one of two gas-chromatic separating columns of a valveless separating-column circuit connected in series, where there is supplied to the input and the output of the first separating column in each case carrier gas with controlled pressure, characterized in that the command variable for the control of the carrier-gas pressure at the input of the first separating column is formed at least proportionately by its output pressure.

2. Device for carrying out the process according to claim 1 with a first gas pressure control (DR1) in the carrier-gas supply line (1, 1') to the input of the first separating column (T1), a second gas pressure control (DR2) in the carrier-gas supply line (2, 2') to the connection point (V) between the separating columns (T1, T2), characterized in that gas pressure controls of the diaphragm control type are used with spring-loaded diaphragm (4) for the mechanical adjustment of the command variable and in that the output of the second pressure control (DR2) is connected by way of a line (8) to an input of a differential pressure control as first pressure control (DR1), the command variable of which is formed at least proportionately by the output pressure (P₂) of the second pressure control (DR2).

3. Device according to claim 2, characterized in that in a branch of the connection line (8) opening into the atmosphere there is arranged a needle valve (NV) limiting the passage to a few millilitres per minute.

## Revendications

1. Procédé pour maintenir constante la différence de pression qui apparait dans une première de deux colonnes de séparation de chromatographie en phase gazeuse, montées l'une derrière l'autre, d'un circuit à colonnes de séparation sans soupape, et selon lequel respectivement un gaz porteur est envoyé à une pression réglée à l'entrée et à la sortie de la première colonne de séparation, caractérisé par le fait que la grandeur pilote pour la régulation de la pression du gaz porteur à l'entrée de la première colonne de séparation est formée au moins en partie à partir de la pression de sortie de cette colonne.

2. Dispositif pour la mise en oeuvre du procédé suivant la revendication 1, comportant un premier régulateur de la pression de gaz (DR1) monté dans la canalisation (1,1') d'amenée du gaz porteur aboutissant à l'entrée de la première colonne de séparation (T1), et un second régulateur de pression de gaz (DR2) monté dans la canalisation (2,2') d'amenée du gaz porteur aboutissant au point de jonction (B) des colonnes de séparation (T1,T2), caractérisé par le fait qu'on utilise les régulateurs de pression de gaz du type à membrane, comportant une membrane (4) chargée par un ressort et servant à régler mécaniquement la grandeur pilote, et que la sortie du second régulateur de pression (DR2) est raccordée, par l'intermédiaire d'une canalisation (8), à une entrée d'un régulateur de pression différentielle constituant le premier régulateur de pression (DR1) et dont la grandeur pilote est formée au moins en partie à partir de la pression de sortie (P₂) du second régulateur de pression (DR2).

3. Dispositif suivant la revendication 2, caractérisé par le fait qu'une soupape à aiguille (NV), qui limite le débit à quelques millilitres par minute, est disposée dans une dérivation de la canalisation de jonction (8), qui débouche dans l'atmosphère.
